# EUROPEAN PATENT SPECIFICATION

(11) **EP 0 993 987 B1**
(45) Date of publication and mention of the grant of the patent: **25.07.2007**
(21) Application number: 99120393.6
(22) Date of filing: 13.10.1999
(51) Int. Cl.: B60Q 1/00

(54) **Modular headlamp with multiple lights for vehicles**
Modularer Kfz-Scheinwerfer mit mehreren Leuchten
Phare modulaire à feux multiples pour véhicule

(30) Priority: 14.10.1998 IT MI980667 U
(43) Date of publication of application: 19.04.2000
(73) Proprietor: Automotive Lighting Italia S.p.A., 10078 Venaria Reale (Torino) (IT)
(72) Inventor: Ressia, Alessio, 10073 Cirie' (IT); Amez Olmedo, Hector Juan, 10073 Cirie' (IT)
(74) Representative: Jorio, Paolo

(56) References cited:
- EP-A- 0 646 495
- EP-A- 0 816 749
- DE-A- 19 508 472
- DE-A- 19 802 023
- DE-C- 4 036 031

## Description

The present invention relates to a modular headlamp with multiple lights for vehicles which makes it possible to obtain different aesthetic effects using few customised components and which may therefore be used to equip different vehicles at low cost.

Headlamps of modular type are known from e.g.EP-A-0646495 incorporating lights of different type, for instance driving and dipped beams, parking lights and direction indicator lights: it is also known that, in general, different vehicle models and in some cases even different versions of the same vehicle model are fitted with headlamps which are also of modular type and are produced specifically to match the aesthetic line of the vehicle and to provide it with a particular combination of lights (for instance a specific relative arrangement of the headlamps and parking and indicator lights).

Document EP-A-0646495 discloses a headlamp with multiple lights for vehicles, comprising a cup-shaped headlamp body closed at the front by a transparent screen, a plurality of modular light units housed in this headlamp body in a predetermined configuration, a support frame for these modular light units and an aesthetic mask borne rigidly by the headlamp body and housed in this headlamp body in front of the support frame, this aesthetic mask being shaped so that it connects together the outer profiles of the modular light units and the headlamp body.

It will be appreciated that a headlamp specific to each model or version entails high production costs, as a large number of dedicated components needs to be produced.

At present, modular headlamps with different aesthetic appearances, i.e. having different configurations of the lights (and therefore adapted to be used with different vehicles) are produced either by completely varying the headlamp body and its inner components, or by starting from the same headlamp body and using dedicated inner aesthetic frames (of different shape and colour), dedicated lenses and dedicated reflectors. It will be appreciated that even when using a single headlamp body that is adapted to be incorporated into different vehicles, there is still the problem of having to produce a large number of additional dedicated components to obtain the specific configuration desired.

The object of the present invention is to provide a headlamp of modular type which makes it possible to obtain, in a simple and economic way, and using a single headlamp body having a standard shape and outer dimensions, aesthetic effects that are so different that in substance they create a range of different headlamps that can be used to equip different vehicles (versions of the same model or even different models).

The invention therefore relates to a modular headlamp with multiple lights for vehicles, comprising a cup-shaped headlamp body closed at the front by a transparent screen, a plurality of modular light units housed in this headlamp body in a predetermined configuration, a plurality of different support frames for these modular light units and of corresponding different aesthetic masks, the aesthetic masks being arranged to be borne rigidly by the headlamp body and housed in this headlamp body in front of the support frame, as claimed in claim 1.

According to a preferred embodiment, the support frame can move with respect to the headlamp body and the headlamp further comprises position adjustment means adapted to displace the support frame with respect to the headlamp body and thus to vary the orientation of the modular light units borne by the support frame.

The interchangeable support frame preferably comprises standard points of connection to the headlamp body, the position adjustment means being adapted to engage these standard connection points in order to displace the support frame with respect to the headlamp body.

According to the invention, therefore, use is made of a single headlamp body of standard shape and dimensions closed at the front by a transparent screen which is also standard such that the same headlamp body can be mounted on different vehicles: the customised components that make it possible to obtain different aesthetic effects specific to individual vehicles are formed solely by the aesthetic mask and the light unit support frame, which is further provided with standard connection/adjustment points so that it can be adapted to the position regulators with which the headlamp body is provided.

This significantly reduces the customised components needed to obtain different aesthetic effects and therefore significant reduces the relative production costs.

Further characteristic features and advantages of the invention are set out in the following description of a non-limiting embodiment thereof, made with reference to the accompanying drawings, in which:
Fig. 1 is a front view of a headlamp of the invention, in particular a front left-hand headlamp of an automobile vehicle;
Figs. 2 and 3 are two views in section, along the lines II-II and III-III respectively, through the headlamp of Fig. 1.

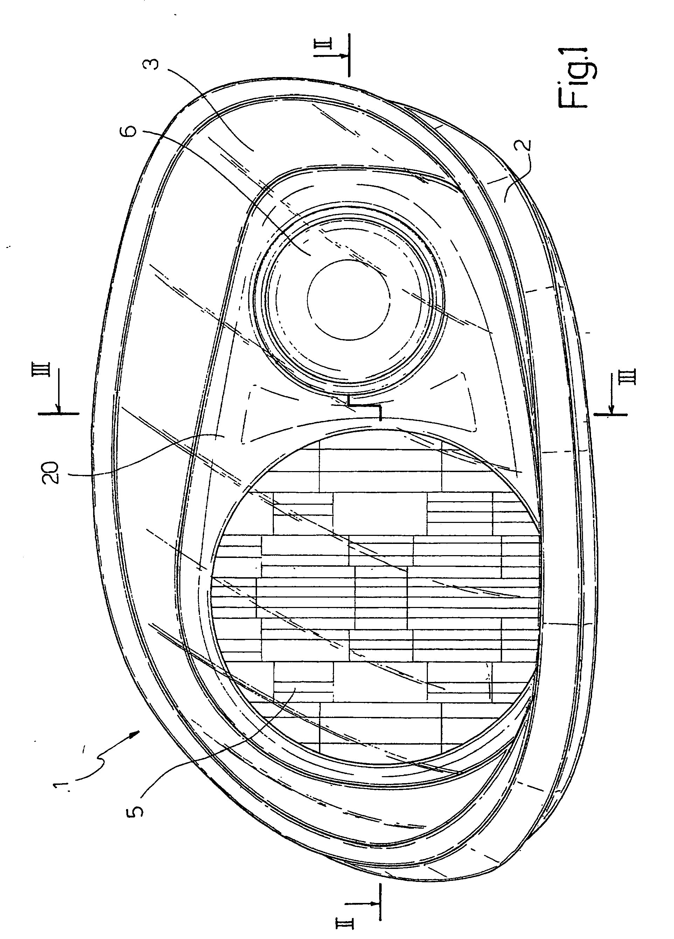

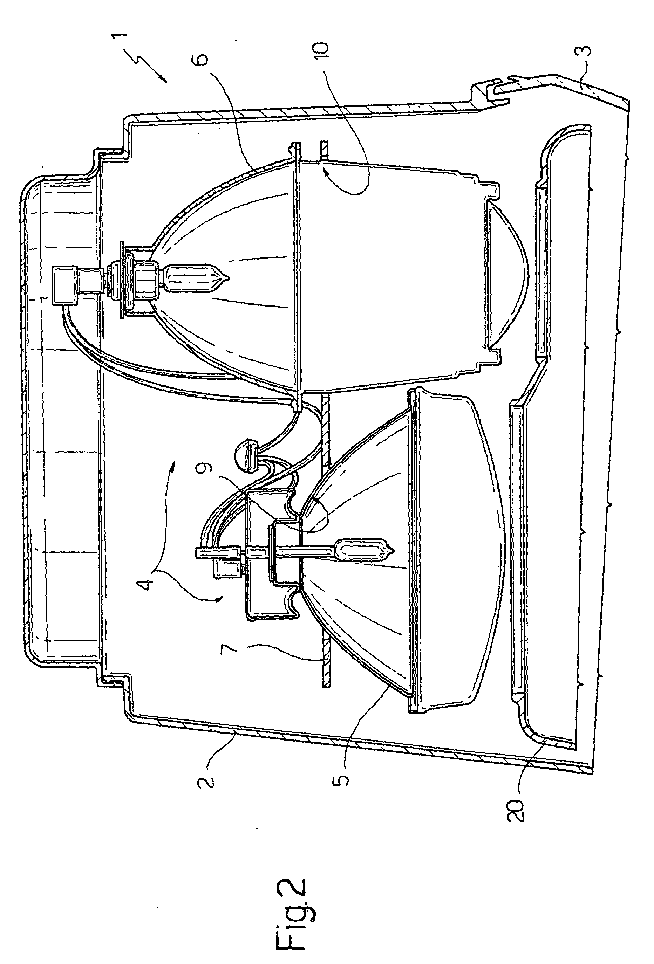

In Figs. 1 to 3, a headlamp for a vehicle, in particular a front left-hand headlamp of an automobile vehicle, of modular type with multiple lights, is shown overall by 1.

The headlamp 1 comprises a cup-shaped headlamp body 2 closed at the front by a transparent screen 3 and a plurality of modular light units 4 housed in the headlamp body 2 in a predetermined configuration: in the non-limiting embodiment shown in Figs. 1 to 3, the modular light units 4 are formed by a substantially known driving beam module 5 and dipped beam module 6. In each case, use is preferably made of light units of standard geometry that are in normal production.

The transparent screen 3 is formed by a single smooth continuous screen that is completely transparent so as to leave the interior of the headlamp body 2 visible from outside.

A support frame 7 for the modular light units 4, movable with respect to the headlamp body 2, and position adjustment means 8 (also of substantially known type) adapted to displace the support frame 7 with respect to the headlamp body 2 and thus to vary the orientation of the modular light units 4, are housed within the headlamp body 2.

The modular light units 4 are mounted rigidly on the support frame 7 in a known manner: in the embodiment, the support frame 7 has respective through seats 9, 10 for the insertion of the driving beam and dipped beam modules 5 and 6; the position adjustment means 8 make it possible, also in a known manner, to orient the support frame 7 with respect to the headlamp body 2 and therefore the light beams of the driving beam and dipped beam modules 5 and 6 with respect to the vehicle.

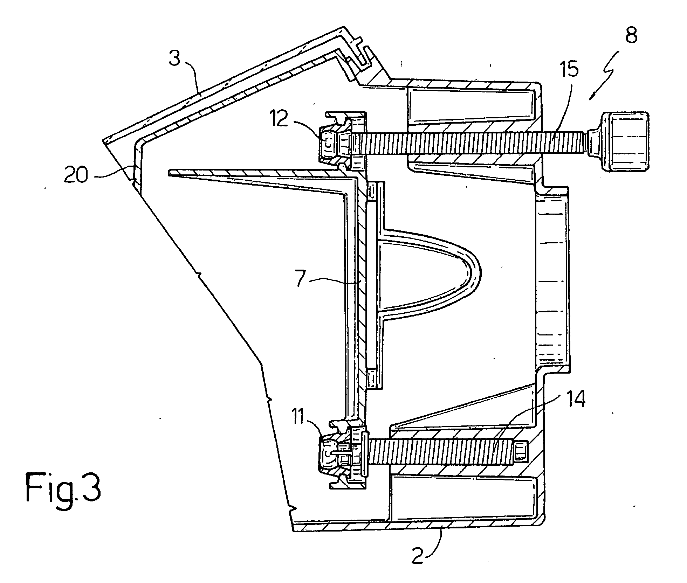

The support frame 7 in particular has three connection points 11, 12, 13 to the headlamp body 2 to which it is secured in a movable way by the position adjustment means 8: according to a widely known solution, shown in particular in Fig. 3, the connection points 11, 12, 13 are disposed at the vertices of a triangle and are formed respectively by a fixed point 11 (for instance a ball joint borne by a screw 14 secured to the headlamp body 2) and by two adjustment points 12 and 13 connected in a sliding manner to the headlamp body 2 (for instance by respective adjustment screws 15): as is known, an arrangement of this type makes it possible to vary the orientation of the support frame 7 with respect to the headlamp body 2 in both a vertical and a horizontal plane (the connection point 13, which is disposed coplanar with respect to the connection point 11 at a predetermined distance therefrom and which is completely identical to the connection point 12, is not shown in Fig. 3 for the sake of simplicity).

An aesthetic mask 20 borne rigidly by the headlamp body 2, to which it is connected in any known manner, is also housed in the headlamp body 2 and is disposed visibly in front of the support frame 7 and facing the transparent screen 3; the aesthetic mask 20 is shaped such that it connects together the outer profiles of the modular light units 4, 5 and the headlamp body 2 creating an aesthetic effect unified with the support frame 7 and the headlamp body 2. It will be appreciated that the aesthetic mask 20 may have any surface finish and may be of different colours (for instance black, grey or aluminised).

According to the invention, the headlamp body 2 and the transparent screen 2 have standard shapes and dimensions so that they can be mounted on a plurality of different vehicles in order to match the aesthetic line of these vehicles without the need for further connection members; vice versa, the support frame 7 and the aesthetic mask 20 are both interchangeable so that they can respectively receive and connect the modular light units 4 disposed in different configurations and in predetermined positions and sequences.

In other words, the interchangeable support frame 7 can be selected from a plurality of support frames (not shown), each of which has a different configuration in order to receive a corresponding configuration of modular light units 4 (for instance those described above), in a predetermined position and sequence, and each of which is provided with the standard points of connection 11, 12, 13 to the headlamp body 2 in the same positions; in turn, the aesthetic mask 20 is also interchangeable and can be selected from a plurality of aesthetic masks (not shown), each of which has a different shape adapted to connect the outer profiles of the headlamp body 2 and the modular light units 4 that it is desired to use, which may be of different shapes and types (for instance square, rectangular or round, driving beams, dipped beams, etc.) and may be disposed in any predetermined configuration on a relative support frame 7.

In this way, I it is possible to house within a single standard headlamp body 2 support frames 7 and aesthetic masks 20 that, although they can all be inserted in the standard headlamp body 2 and secured thereto, differ in terms of their shape and/or the presence of seats for the insertion of modular light units 4 in different positions; it will be appreciated that the number, type and relative arrangement of the modular light units 4 that may be used according to the invention may be of any type.

It will also be appreciated, although this possibility has not been illustrated for the sake of simplicity, that some of the modular light units 4 may not be mounted on the support frame 7 but directly on the headlamp body 2 which would be provided with appropriate connection members in predetermined positions; in this case, the modular light units 4 could also be disposed to pass though corresponding openings in the support frame 7 (but not connected thereto) or could be disposed laterally with respect to this support frame 7. It will be appreciated that this possibility is particularly suited to light units whose positions do not need to be adjusted, such as parking or indicator lights.

According to the invention, and in accordance with the above description, it is therefore possible to produce an integrated system of modular headlamps 1 with multiple lights adapted to equip different vehicles, in which the headlamps 1 all comprise a standard, identical cup-shaped headlamp body 2 closed at the front by a standard, identical transparent screen 3: the standard headlamp body 2 and the standard transparent screen 3 have a standard shape and dimensions in order to be mounted on different vehicles and to match their aesthetic line without the need for further connection members; the headlamps 1 further comprise, depending on the vehicle for which they are adapted, a different predetermined configuration of modular light units 4 housed inside the standard headlamp body 2 in a particular sequence and arrangement, a corresponding dedicated support frame 7 for the modular light units 4 adapted to receive the latter disposed in their predetermined configuration and a corresponding dedicated aesthetic mask 20 shaped in order to connect together the outer profiles of the modular light units 4 and the standard headlamp body 2.

It will also be appreciated that further modifications and variations not departing from the scope of the claims may be made to the headlamp as described.

## Claims

1. A modular headlamp (1) with multiple lights for vehicles, comprising a cup-shaped headlamp body (2) closed at the front by a transparent screen (3), a plurality of modular light units (4) housed in this headlamp body (2) in a predetermined configuration, a plurality of different support frames (7) for these modular light units (4) and of corresponding different aesthetic masks (20), the aesthetic mask (20) being arranged to be borne rigidly by the headlamp body (2) and housed in this headlamp body (2) in front of the support frame (7), these aesthetic masks (20) being shaped so that they can connect together the outer profiles of the modular light units (4) and the headlamp body (2), wherein the support frame (7) and the aesthetic mask (20) are both interchangeable in order respectively to receive and connect the modular light units (4) disposed in different configurations and in predetermined positions and sequences.

2. A headlamp as claimed in claim 1, **characterised in that** the support frame (7) can move with respect to the headlamp body (2) and **in that** it further comprises position adjustment means (8) adapted to displace the support frame (7) with respect to the headlamp body (2) and thus to vary the orientation of the modular light units (4) borne by this support frame (7).

3. A headlamp as claimed in claim 2, **characterised in that** the interchangeable support frame (7) comprises standard points of connection (11, 12, 13) to the headlamp body (2), the position adjustment means (8) being adapted to engage these standard connection points (11, 12, 13) in order to displace the support frame (7) with respect to the headlamp body (2).

4. A headlamp as claimed in claim 3, **characterised in that** the interchangeable support frame (7) can be selected from a plurality of support frames, each of which has a different configuration in order to receive a corresponding configuration of modular light units (4) in a predetermined position and sequence and is provided with the standard connection points (11, 12, 13) in the same positions.

5. A headlamp as claimed in claim 3 or 4, **characterised in that** the support frame (7) has three standard points of connection (11, 12, 13) to the lamp body (2), disposed at the vertices of a triangle and adapted to be engaged by the position adjustment means (8).

6. A headlamp as claimed in one of the preceding claims, **characterised in that** the interchangeable aesthetic mask (20) can be selected from a plurality of aesthetic masks, each of which has a different shape adapted to connect the outer profiles of the headlamp body (2) and the modular light units (4) disposed in a corresponding predetermined sequence on a relative support frame (7).

7. A headlamp as claimed in one of the preceding claims, **characterised in that** the transparent screen (3) is formed by a single smooth, continuous and fully transparent screen in order to leave the interior of the headlamp body (2) visible from outside.

8. A headlamp as claimed in one of the preceding claims, **characterised in that** the modular light units (4) comprise at least one driving beam module (5) and one dipped beam module (6).

9. A headlamp as claimed in one of the preceding claims, **characterised in that** it comprises further modular light units (4) borne rigidly by the headlamp body (2) and disposed to pass through the support frame (7) or laterally thereto.

## Patentansprüche

1. Modulscheinwerfer (1) mit mehreren Beleuchtungen für Fahrzeuge, umfassend einen topfförmigen Scheinwerferkörper (2), der an der Vorderseite durch eine durchsichtige Abschirmung (3) geschlossen ist, eine Vielzahl von modularen Beleuchtungseinheiten (4), die in einer vorgegebenen Konfiguration, in diesen Scheinwerferkörper (2) aufgenommen sind, eine Vielzahl von verschiedenen Tragrahmen (7) für diese modularen Beteuchtungseinheiten (4) und eine Vielzahl von entsprechenden verschiedenen ästhetischen Abdeckungen (20), wobei die ästhetischen Abdeckungen eingerichtet sind, um starr von dem Scheinwerferkörper (2) getragen zu werden und vor dem Tragrahmen (7) in diesen Scheinwerferkörper (2) aufgenommen sind, diese ästhetischen Abdeckungen (20) so geformt sind, dass sie die Außenprofile der modularen Beleuchtungseinheiten (4) und des Scheinwerferkörpers (2) miteinander verbinden können, wobei der Tragrahmen (7) und die ästhetische Abdeckung (20) beide auswechselbar sind, um jeweils die modularen Beleuchtungseinheiten (4), angeordnet in verschiedenen Konfigurationen und in vorgegebenen Positionen und Reihenfolgen, aufzunehmen und zu verbinden.

2. Scheinwerfer nach Anspruch 1, **dadurch gekennzeichnet, dass** sich der Tragrahmen (7) in Bezug auf den Scheinwerferkörper (2) bewegen kann und dass er des Weiteren Positionseinstellungseinrichtungen (8) umfasst, die so eingerichtet sind, dass sie den Tragrahmen (7) in Bezug auf den Scheinwerferkörper (2) verschieben können und **dadurch** die Ausrichtung der modularen Beleuchtungseinheiten (4), die von diesem Tragrahmen (7) getragen werden, ändern.

3. Scheinwerfer nach Anspruch 2, **dadurch gekennzeichnet, dass** der auswechselbare Tragrahmen (7) Standardverbindungsstellen (11,12,13) zu dem Scheinwerferkörper (2) umfasst, wobei die Positionseinstellungseinrichtungen (8) eingerichtet sind, um in diese Standardverbindungsstellen (11, 12, 13) einzugreifen, um den Tragrahmen (7) in Bezug auf den Scheinwerferkörper (2) zu verschieben.

4. Scheinwerfer nach Anspruch 3, **dadurch gekennzeichnet, dass** der auswechselbare Tragrahmen (7) aus einer Vielzahl von Tragrahmen ausgewählt werden kann, von denen jeder eine verschiedene Konfiguration aufweist, um eine entsprechende Konfiguration modularer Beleuchtungseinheiten (4) in einer vorgegebenen Position und Reihenfolge aufzunehmen und an denselben Stellen mit den Standardverbindungsstellen (11, 12, 13) versehen ist.

5. Scheinwerfer nach Anspruch 3 oder 4, **dadurch gekennzeichnet, dass** der Tragrahmen drei Standardverbindungsstellen (11, 12, 13) zu dem Scheinwerferkörper (2) hat, die an den Eckpunkten eines Dreiecks angeordnet sind und so eingerichtet sind, dass die Positionseinstellungseinrichtungen (6) darin eingreifen.

6. Scheinwerfer nach einem der vorhergehenden Ansprüche, **dadurch gekennzeichnet, dass** die auswechselbare ästhetische Abdeckung (20) aus einer Vielzahl von ästhetischen Abdeckungen ausgewählt werden kann, von denen jede eine verschiedene Form hat, die eingerichtet ist, um die Außenprofile des Scheinwerferkörpers (2) und der modularen Beleuchtungseinheiten (4) angeordnet in einer entsprechenden vorgegebenen Reihenfolge auf einem relativen Tragrahmen (7), zu verbinden.

7. Scheinwerfer nach einem der vorhergehenden Ansprüche, **dadurch gekennzeichnet, dass** die durchsichtige Abschirmung (3) durch eine einzelne, glatte, durchgängige und vollständig durchsichtige Abschirmung gebildet wird, um das Innere des Scheinwerferkörpers (2) von außen sichtbar sein zu lassen.

8. Scheinwerfer nach einem der vorhergehenden Ansprüche, **dadurch gekennzeichnet, dass** die modularen Beleuchtungseinheiten (4) wenigstens ein Fernlichtmodul (5) und ein Abblendlichtmodul (6) umfassen.

9. Scheinwerfer nach einem der vorhergehenden Ansprüche, **dadurch gekennzeichnet, dass** er des Weiteren modulare Beleuchtungseinheiten (4) umfasst, die starr von dem Scheinwerfkörper (2) getragen werden und angeordnet sind, um durch den Tragrahmen (7) oder seitlich dazu zu verlaufen.

## Revendications

1. Phare modulaire (1) à feux multiples pour véhicules, comprenant un boîtier de phare (2) en forme de coupe fermé à l'avant par un écran transparent (3), une pluralité de modules de feu (4) logés dans ce boîtier de phare (2) dans une configuration prédéterminée, une pluralité de différents châssis de support (7) pour ces modules de feu (4) et de différents masques esthétiques (20) correspondants, le masque esthétique (20) étant agencé pour être porté rigidement par le boîtier de phare (2) et logé dans ce boîtier de phare (2) devant le châssis de support (7), ces masques esthétiques (20) étant façonnés pour pouvoir relier les profils extérieurs des modules de feu (4) et du boîtier de phare (2), dans lequel le châssis de support (7) et le masque esthétique (20) sont tous les deux interchangeables de manière respectivement à recevoir et réunir les modules de feu (4) placés dans différentes configurations et dans des positions et ordres prédéterminés.

2. Phare selon la revendication 1, **caractérisé en ce que** le châssis de support (7) est déplaçable par rapport au boîtier de phare (2) et **en ce qu'**il comprend en outre un moyen de réglage de position (8) adapté pour déplacer le châssis de support (7) par rapport au boîtier de phare (2) et modifier ainsi l'orientation des modules de feu (4) portés par ce châssis de support (7).

3. Phare selon la revendication 2, **caractérisé en ce que** le châssis de support interchangeable (7) comprend des points d'assemblage standard (11, 12, 13) au boîtier de phare (2), le moyen de réglage de position (8) étant adapté pour engager ces points d'assemblage standard (11, 12, 13) afin de déplacer le châssis de support (7) par rapport au boîtier de phare (2).

4. Phare selon la revendication 3, **caractérisé en ce que** le châssis de support interchangeable (7) peut être choisi parmi une pluralité de châssis de support, dont chacun présente une configuration différente afin de recevoir une configuration correspondante de modules de feu (4) dans une position et un ordre prédéterminés et comprend les points d'assemblage standard (11, 12, 13) dans les mêmes positions.

5. Phare selon la revendication 3 ou 4, **caractérisé en ce que** le châssis de support (7) comporte trois points d'assemblage standard (11, 12, 13) au boîtier de phare (2), placés aux sommets d'un triangle et adaptés pour être engagés par le moyen de réglage de position (8).

6. Phare selon l'une des revendications précédentes, **caractérisé en ce que** le masque esthétique interchangeable (20) peut être choisi parmi une pluralité de masques esthétiques, dont chacun présente une forme différente adaptée pour relier les profils extérieurs du boîtier de phare (2) et des modules de feu (4) placés dans un ordre prédéterminé correspondant sur un châssis de support (7) relatif.

7. Phare selon l'une des revendications précédentes, **caractérisé en ce que** l'écran transparent (3) est formé par un seul écran lisse, continu et entièrement transparent afin de laisser l'intérieur du boîtier de phare (2) visible de l'extérieur.

8. Phare selon l'une des revendications précédentes, **caractérisé en ce que** les modules de feu (4) comprennent au moins un module de feu de route (5) et un module de feu de croisement (6).

9. Phare selon l'une des revendications précédentes, **caractérisé en ce qu'**il comprend en outre des modules de feu (4) portés rigidement par le boîtier de phare (2) et placés pour passer à travers le châssis de support (7) ou latéralement par rapport à lui.
